# EUROPÄISCHE PATENTSCHRIFT

(11) **EP 1 184 271 B1**
(45) Veröffentlichungstag und Bekanntmachung des Hinweises auf die Patenterteilung: **30.11.2005**
(21) Anmeldenummer: 01116943.0
(22) Anmeldetag: 11.07.2001
(51) Int. Cl.: B62J 1/16, F16B 7/04

(54) **Haltevorrichtung für einen Fahrrad-Kindersitz oder dergleichen**
Device for securing an additional seat on a bicycle
Dispositif pour attacher un siège pour enfants à une bicyclette

(30) Priorität: 26.07.2000 DE 10036430
(43) Veröffentlichungstag der Anmeldung: 06.03.2002
(73) Patentinhaber: HAMAX AS, 1679 Krakeroy (NO)
(72) Erfinder: Hauglin, Bernt Otto, 3440 Royken (NO)
(74) Vertreter: Popp, Eugen

(56) Entgegenhaltungen:
- WO-A-00/17528
- US-A- 4 528 998
- US-A- 4 711 595
- US-A- 5 143 476

## Beschreibung

Die vorliegende Erfindung bezieht sich auf eine Haltevorrichtung für einen gesonderten oder integrierten Gepäckträger, insbesondere Fahrrad-Gepäckträger, Kfz-Dachgepäckträger, Kfz-Fahrradträger, Fahrrad-Kindersitz oder Träger dafür, gemäß dem Oberbegriff des Patentanspruchs 1.

Haltevorrichtungen für Fahrrad-Gepäckträger, Kfz-Dachgepäckträger, Kfz-Fahrradträger oder Fahrrad-Kindersitze sind in vielfältiger Weise bekannt. So ist der DE 43 25 965 A1 eine derartige Haltevorrichtung für Fahrrad-Kindersitze zu entnehmen, die vorzugsweise an dem Sitzrohr eines Fahrradrahmens befestigt wird. Da diese Haltevorrichtung nicht näher beschrieben ist, ist der DE 43 25 965 A1 auch nicht zu entnehmen, ob sie Vorkehrungen umfaßt, die eine sichere Verriegelung eines an der Haltevorrichtung montierten Trägers anzeigen.

In der Regel wird ein Träger bzw. ein Anschlußteil desselben in eine zugeordnete Haltevorrichtung eingerastet. Um die Rastverbindung zu überprüfen, muß der Benutzer am Träger ziehen. Nur so kann festgestellt werden, ob der Träger sicher an der Haltevorrichtung angeschlossen ist. Diese Überprüfung ist vor allem für Fahrrad-Kindersitze von Bedeutung; denn der Benutzer kann nicht Gefahr laufen, daß sich der Kindersitz während des Fahrens von selbst löst.

Aus der US 4 711 595 ist eine Haltevorrichtung gemäß dem Oberbegriff des Patentanspruchs 1 bekannt, welche eine Öffnung zur Aufnahme eines Anschlußteils umfasst, wobei ein in der Haltevorrichtung angeordnetes Signalelement zur optischen und/oder fühlbaren Anzeige der Verriegelungsstellung der Haltevorrichtung durch ein Anschlußteil beaufschlagbar ist. Da es sich bei dem die korrekte Verriegelung signalisierenden Signalelement gleichzeitig um das Verriegelungselement handelt, ist dieses einem (erhöhten) Verschleiß ausgesetzt. Dadurch besteht die Gefahr einer ungewollten Entfernung einer Farbschicht, oder anderweitige Beschädigungen wodurch die Visualisierung eines korrekten Verriegelungszustandes erschwert wird. Ferner ist es in der US 4 711 595 vorgesehen, daß die jeweiligen Vorrichtungen nur mit Hilfe eines Spezialwerkzeugs entriegelt werden können. Dies führt zu einer komplizierten Handhabung und zu einem hohen Produktionsaufwand, da zu jeder Verschlußeinrichtung ein passendes Werkzeug mitgeliefert werden muß.

Der vorliegenden Erfindung liegt daher die Aufgabe zugrunde, eine kostengünstige Haltevorrichtung zu schaffen, die sicher erkennen läßt, ob ein zugeordneter Gepäckträger, insbesondere Kindersitzträger funktionssicher angeschlossen ist oder nicht.

Diese Aufgabe wird erfindungsgemäß durch die kennzeichnenden Merkmale des Anspruches 1 gelöst.

Ein wesentlicher Punkt der vorliegenden Erfindung ist es also, daß das Signalelement unabhängig von einem Verriegelungselement der Haltevorrichtung von einem Anschlußteil bewegbar ist derart, daß in einer Bauform, in der das Signalelement im verriegelten Zustand durch ein Gehäuse der Haltevorrichtung verdeckt ist, der in einem unverriegelten Zustand der Haltevorrichtung nicht durch das Gehäuse der Haltevorrichtung verdeckte Teil des Signalelements eine Farbe trägt, die für "Achtung" steht, während in einer anderen Bauform, in der das Signalelement im verriegelten Zustand der Haltevorrichtung nicht durch ein Gehäuse der Haltevorrichtung verdeckt ist, der nicht durch das Gehäuse der Haltevorrichtung verdeckte Teil des Signalelements eine Farbe trägt, die für "in Ordnung" steht.

Der vorgenannte Erfindungsgedanke gilt für alle Arten von Trageinrichtungen, d.h. auch für Kraftfahrzeug-Fahrradträger, Dachgepäckträger, Gepäckcontainer oder dergleichen. Statt eines optischen Signalelements kann auch ein Tastelement vorgesehen sein, welches eine ordnungsgemäße Verriegelung der vorgenannten Teile erkennen läßt.

Durch die erfindungsgemäße Konstruktion ist ferner gewährleistet, daß der Benutzer im erstgenannten Fall eine rote Farbe für "Achtung" sieht, was soviel bedeutet, daß keine Verriegelung zustandegekommen ist. Im zweiten Fall sieht der Benutzer eine grüne Farbe, wenn eine sichere Verriegelung vorliegt. Die grüne Farbe spricht für "ordnungsgemäß verriegelt".

Vorzugsweise ist die Haltevorrichtung dadurch gekennzeichnet, daß das Signalelement einen elastisch vorgespannten Schwenkhebel umfaßt derart, daß sein eines Ende in die Bahn des Anschlußteils bei Bewegung desselben in die Verriegelungsstellung hineinragt, um dann vom Anschlußteil, sobald sich dieses in Verriegelungsstellung befindet, aus der erwähnten Bahn herausgedrängt zu werden unter gleichzeitigem Verschwenken des zugeordneten Schwenkhebels und dessen anderen Endes, welches anzeigt, ob sich das Anschlußteil in verriegelter Stellung befindet oder nicht.

Durch die vorgesehene elastische Vorspannung des Schwenkhebels wird in einfacher Weise eine funktionssichere Mechanik erhalten.

Von besonderer Bedeutung sind noch die Merkmale des Anspruches 4, wonach das Verriegelungselement längs der Bahn des Anschlußteils bei Bewegung desselben in die Verriegelungsstellung vor dem in diese Bahn hineinragenden Signalelement bzw. einem mit diesem wirkverbundenen Teil angeordnet ist, so daß erst nach sicherem Eingriff des Verriegelungselements am Anschlußteil das Signalelement betätigt wird. Diese Zuordnung ist also für eine sichere Funktion der erfindungsgemäßen Haltevorrichtung von Bedeutung.

Bezüglich weiterer Merkmale der erfindungsgemäßen Haltevorrichtung wird auf die Ansprüche 3 und 5 bis 9 verwiesen.

Nachstehend wird eine Ausführungsform der erfindungsgemäßen Haltevorrichtung anhand der beigefügten Zeichnungen näher erläutert. Es zeigen:
- Fig. 1: eine erfindungsgemäß ausgebildete Haltevorrichtung in Verriegelungsstellung und perspektivischer Ansicht;
- Fig. 2: die Haltevorrichtung gemäß Figur 1 im entriegelten Zustand;
- Fig. 3: die Haltevorrichtung gemäß Figur 1 mit weggebrochener Seitenwand unter Darstellung der Verriegelungs- und Signalmechanik; und
- Fig. 4: eine Darstellung entsprechend Figur 3, jedoch im Entriegelungszustand.

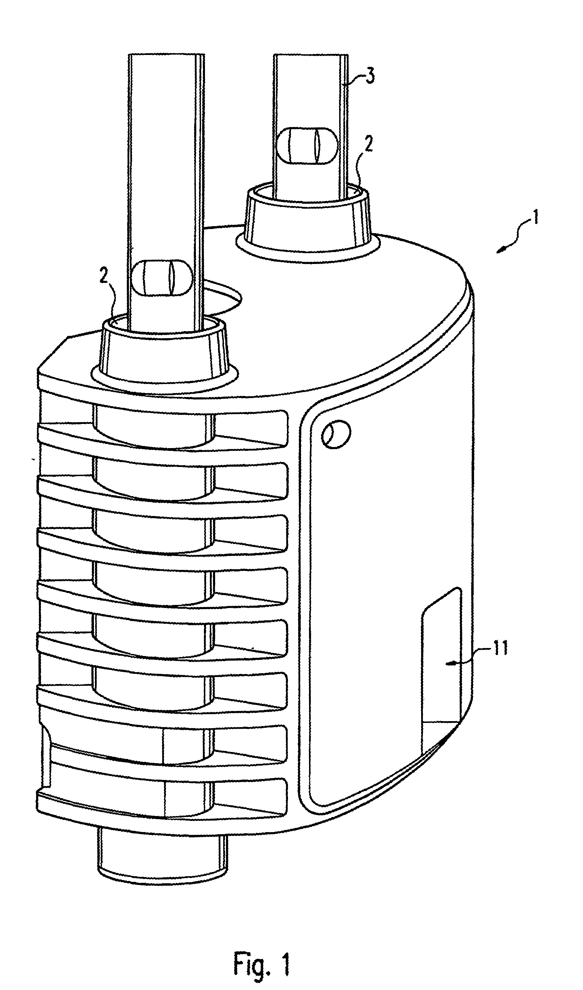

Figur 1 zeigt einen Teil einer an einem Sitzrohr eines Fahrrads anschließbaren Haltevorrichtung mit zwei an der Oberseite angeordneten Öffnungen 2 zur Aufnahme eines stabförmigen Anschlußteils 3, welches Teil eines Gepäckträgers, insbesondere Trägers für einen Fahrrad-Kindersitz ist.

Bei vollständiger Einführung des stabartigen Anschlußteils 3 in die Öffnungen 2 erfolgt innerhalb der Haltevorrichtung 1 eine Verriegelung. Bei Verriegelung ist von außen kein Signalelement erkennbar, welches anzeigt, daß die Verriegelung nicht in Ordnung ist. Dementsprechend muß der Benutzer davon ausgehen, daß das stabförmige Anschlußteil 3 ordnungsgemäß innerhalb der Haltevorrichtung 1 verriegelt ist. Durch Drücken einer nicht näher dargestellten druckknopfartigen Handhabe 11 an der Vorderseite der Haltevorrichtung 1 läßt sich die Verriegelung für die Anschlußstäbe 3 wieder lösen, so daß der zugeordnete Träger für einen Fahrrad-Kindersitz oder Gepäckträger aus der Haltevorrichtung herausgezogen werden kann.

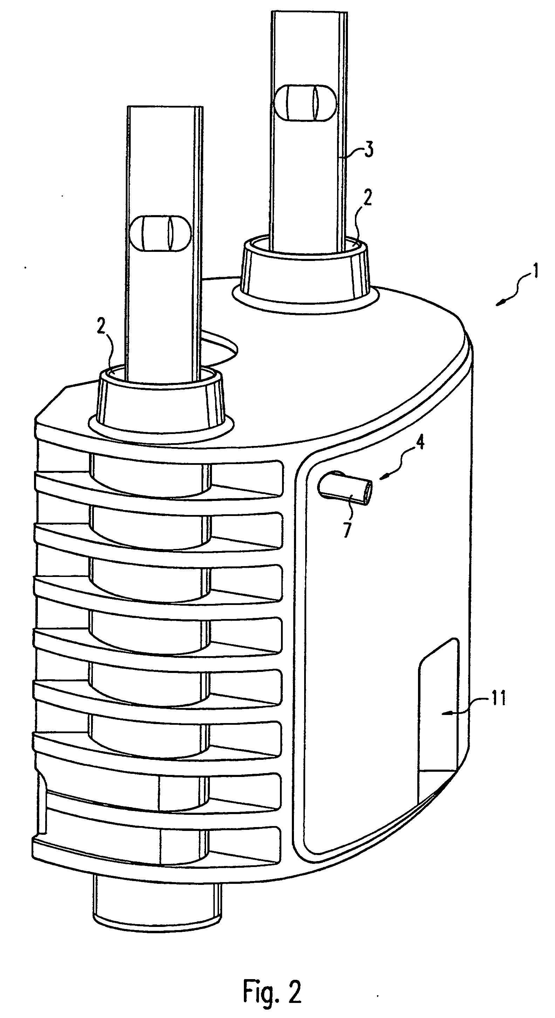

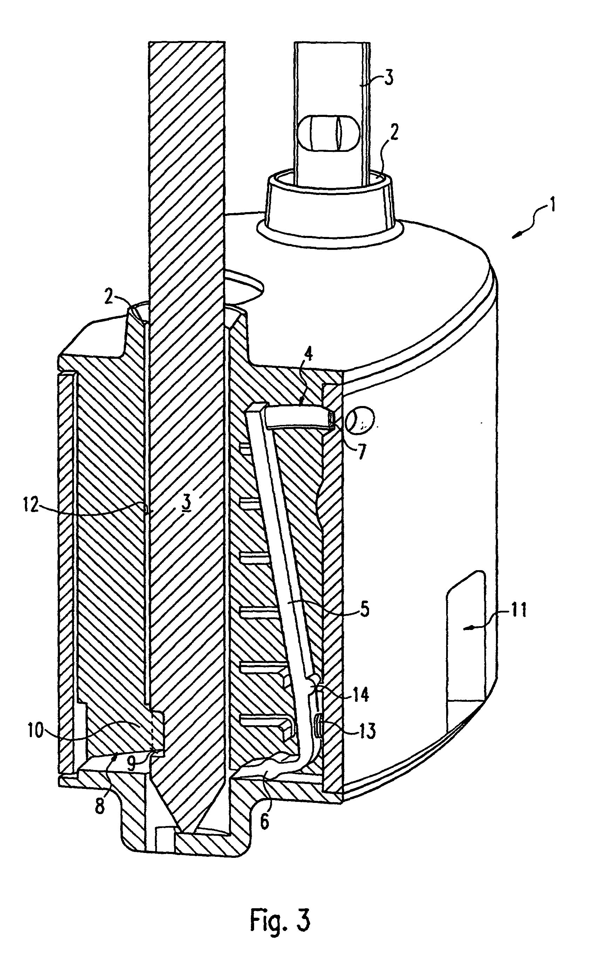

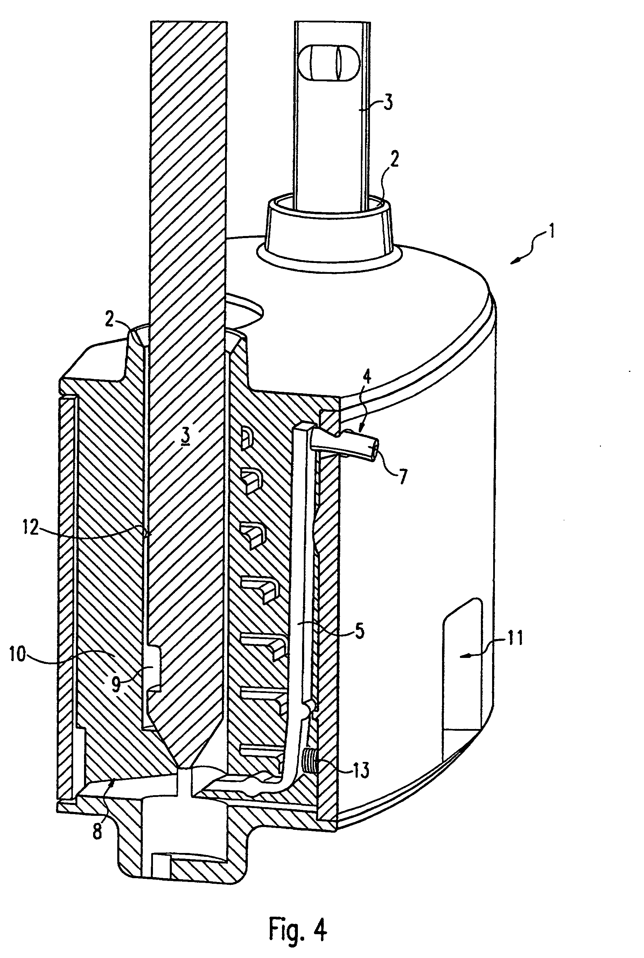

Figur 2 läßt erkennen, daß die das Anschlußteil 3 definierenden Stäbe weniger weit in die Öffnungen 2 eingeschoben sind. In dieser Stellung sind die Stäbe 3 innerhalb der Haltevorrichtung 1 noch nicht verriegelt. Dies wird optisch angezeigt durch einen an der Vorderseite vorstehenden Signalstift 7, der Teil eines Signalelements 4 ist, welches anhand der Figuren 3 und 4 noch näher beschrieben wird.

Bei Dunkelheit läßt sich eine Verriegelung ertasten. Es läßt sich nämlich sehr leicht feststellen, ob der Signalstift 7 an der Vorderseite der Haltevorrichtung 1 vorsteht oder nicht.

Beim dargestellten Ausführungsbeispiel umfaßt das Anschlußteil 2 Stäbe, denen jeweils ein Signalelement 4 zugeordnet ist.

Die Figuren 3 und 4 entsprechen den Figuren 1 und 2. Figur 3 zeigt also den verriegelten Zustand des Anschlußteils 3, während Figur 4 den entriegelten Zustand darstellt. Entsprechend den Figuren 3 und 4 umfaßt das bereits erwähnte Signalelement einen durch eine Schraubendruckfeder 13 elastisch vorgespannten Schwenkhebel 5 derart, daß sein eines, nämlich unteres Ende 6 in die Bahn des Anschlußteil 3 bei Bewegung desselben in die Verriegelungsstellung hineinragt, um dann vom erwähnten Anschlußteil 3, sobald sich dieses in Verriegelungsstellung entsprechend Figur 3 befindet, aus der erwähnten Bahn herausgedrängt zu werden unter gleichzeitigem Verschwenken des zugeordneten Schwenkhebels 5 und dessen anderen Endes 7, welches anzeigt, ob sich das Anschlußteil 3 in verriegelter Stellung befindet oder nicht. Wie bereits erwähnt, ist das Anschlußteil 3 durch zwei Stababschnitte definiert, die jeweils in eine komplementäre Aufnahmebohrung 12 der Haltevorrichtung 1 einschiebbar sind, wobei Aufnahmebohrungen 12 die Bewegungsbahn der erwähnten Stababschnitte in die Verriegelungsstellung definieren, und wobei in diese Aufnahmenbohrungen 12 jeweils unter elastischer Vorspannung das untere Ende des Signalelements 4 bzw. Schwenkhebels 5 hineingedrängt ist. Der Schwenkhebel 5 ist um eine horizontale Achse 14 verschwenkbar.

Die Teile 5, 6 und 7 des Signalelements 4 definieren einen etwa S- oder von der Rückseite betrachtet etwa Z-förmigen Schwenkhebel.

Dem Anschlußteil 3 ist ein Verriegelungselement 8 zugeordnet, welches in Verriegelungsstellung mit dem Anschlußteil 3 verrastet ist. Die entsprechende Raststellung ist in Figur 3 dargestellt. Das erwähnte Verriegelungselement 8 ist längs der durch die Aufnahmebohrungen 12 definierten Bahn des Anschlußteils 3 bei Bewegung desselben in die Verriegelungsstellung vor dem in diese Bahn hineinragenden Signalelement 4 bzw. dem mit diesem wirkverbundenen unteren Ende 6 angeordnet, so daß erst nach sicherem Eingriff des Verriegelungselements 8 am Anschlußteil 3 das Signalelement 4 betätigt wird, nämlich in eine die Verriegelungsstellung anzeigende Stellung verschwenkt wird. Das Verriegelungselement 8 ist ein mit einer korrespondierenden Ausnehmung 9 am Anschlußteil 3 zusammenwirkender Zapfen 10. Statt dessen kann auch ein Verriegelungskeil oder Riegel vorgesehen sein, der durch ein federelastisches Element in Verriegelungsstellung vorgespannt ist. Dieses federelastische Element ist in den Figuren 3 und 4 nicht dargestellt. Es wirkt jedoch in den Figuren 3 und 4 jeweils von links nach rechts, d.h. in die Aufnahmebohrungen 12 für die das Abschlußteil 3 definierenden Stäbe hinein. Der Verriegelungszapfen 10 ist mit einer druckknopfartigen Handhabe 11 gekoppelt, so daß bei Beaufschlagung derselben der Verriegelungszapfen 10 in eine Anschlußteil-Freigabestellung bringbar ist. Durch den Druckknopf 11 wird also der Verriegelungszapfen 8 in den Figuren 3 und 4 von rechts nach links bewegt soweit, bis die das Anschlußteil 3 definierenden Stäbe mühelos aus den zugeordneten Aufnahmebohrungen 12 innerhalb der Haltevorrichtung 1 herausgezogen werden können. Die oberen Enden der Aufnahmebohrungen 12 definieren die oben erwähnten Öffnungen 2.

Die Haltevorrichtung 1 ist vorzugsweise aus Leichtmetall, insbesondere Aluminium, oder Kunststoff hergestellt und - wie bereits erwähnt - am Rahmen eines Fahrzeugs, hier an einem Sitzrohr eines Fahrrads befestigbar, insbesondere festklemmbar.

Das Anschlußteil 3 kann integraler Teil eines Gepäckträgers, Trägers für einen Fahrrad-Kindersitz, eines Gepäckbehälters oder dergleichen sein.

Es ist natürlich auch denkbar, statt eines Schwenkhebelmechanismus einen Schiebemechanismus oder dergleichen vorzusehen, d.h. einen Mechanismus, bei dem das Signalelement 7 Teil eines innerhalb des Gehäuses der Haltevorrichtung 1 verschiebbarer Bolzens ist, wobei dieser mit seinem anderen Ende dann mit dem Anschlußteil ähnlich zusammenwirkt wie der beschriebene Schwenkhebel 5.

### Bezugszeichenliste

- 1: Haltevorrichtung
- 2: Öffnung
- 3: Anschlußteil (Träger)
- 4: Signalelement
- 5: Schwenkhebel
- 6: Beaufschlagungsende des Schwenkhebels 5
- 7: Signalgebendes Ende des Schwenkhebels 5
- 8: Verriegelungselement
- 9: Ausnehmung
- 10: Zapfen
- 11: Druckknopfartige Handhabe
- 12: Aufnahmebohrung
- 13: Feder

## Patentansprüche

1. Haltevorrichtung (1) für einen gesonderten oder integrierten Gepäckträger, insbesondere Fahrrad-Gepäckträger, Kfz-Dachgepäckträger, Kfz-Fahrradträger, Fahrrad-Kindersitz oder Träger dafür, oder dergleichen zur Montage an einem Fahrzeug, insbesondere Fahrzeugrahmen, mit wenigstens einer Öffnung (2) zur Aufnahme eines Anschlußteils (3), wobei ein in der Haltevorrichtung (1) angeordnetes Signalelement (4) zur optischen und/oder fühlbaren Anzeige der Verriegelungsstellung der Haltevorrichtung (1) durch ein Anschlußteil (3) beaufschlagbar ist,
**dadurch gekennzeichnet, dass**
das Signalelement (4) unabhängig von einem Verriegelungselement (8) der Haltevorrichtung (1) von einem Anschlußteil (3) bewegbar ist derart, dass
in einer Bauform, in der das Signalelement (4) im verriegelten Zustand durch ein Gehäuse der Haltevorrichtung (1) verdeckt ist, der in einem unverriegelten Zustand der Haltevorrichtung (1) nicht durch das Gehäuse der Haltevorrichtung (1) verdeckte Teil des Signalelements (4) eine Farbe trägt, die für "Achtung" steht, während
in einer anderen Bauform, in der das Signalelement (4) im verriegelten Zustand der Haltevorrichtung (1) nicht durch ein Gehäuse der Haltevorrichtung (1) verdeckt ist, der nicht durch das Gehäuse der Haltevorrichtung (1) verdeckte Teil des Signalelements eine Farbe trägt, die für "in Ordnung" steht.

2. Haltevorrichtung nach Anspruch 1,
**dadurch gekennzeichnet, daß**
das Signalelement (4) einen elastisch vorgespannten (13) Schwenkhebel (5) umfaßt derart, daß sein eines Ende (6) in die Bahn des Anschlußteils (3) bei Bewegung desselben in die Verriegelungsstellung hineinragt, um dann vom Anschlußteil (3), sobald sich dieses in Verriegelungsstellung befindet, aus der erwähnten Bahn herausgedrängt zu werden unter gleichzeitigem Verschwenken des zugeordneten Schwenkhebels (5) und dessen anderen Endes (7), welches anzeigt, ob sich das Anschlußteil (3) in verriegelter Stellung befindet oder nicht.

3. Haltevorrichtung nach einem der Ansprüche 1 oder 2,
**dadurch gekennzeichnet, daß**
dem Anschlußteil (3) ein Verriegelungselement (8) zugeordnet ist, welches in Verriegelungsstellung mit dem Anschlußteil (3) verrastet ist.

4. Haltevorrichtung nach Anspruch 3,
**dadurch gekennzeichnet, daß**
das Verriegelungselement (8) längs der Bahn des Anschlußteils (3) bei Bewegung desselben in die Verriegelungsstellung vor dem in diese Bahn hineinragenden Signalelement (4) bzw. einem mit diesem wirkverbundenen Teil (6) angeordnet ist, so daß erst nach sicherem Eingriff des Verriegelungselements (8) am Anschlußteil (3) das Signalelement (4) betätigt wird.

5. Haltevorrichtung nach Anspruch 3 oder 4,
**dadurch gekennzeichnet, daß**
das Verriegelungselement (8) ein mit einer korrespondierenden Ausnehmung (9) am Anschlußteil (3) zusammenwirkender Zapfen (10), Keil oder Riegel ist, der durch ein federelastisches Element in Verriegelungsstellung vorgespannt ist.

6. Haltevorrichtung nach Anspruch 5,
**dadurch gekennzeichnet, daß**
der Verriegelungszapfen (10) oder dergleichen mit einer vorzugsweise druckknopfartigen Handhabe (11) gekoppelt ist, so daß bei Beaufschlagung der Handhabe (11) der Verriegelungszapfen (10) oder dergleiche Verriegelungselement (8) in eine Anschlußteil-Freigabestellung bringbar ist.

7. Haltevorrichtung nach einem der Ansprüche 1 bis 6,
**dadurch gekennzeichnet, daß**
das Anschlußteil (3) durch wenigstens einen Rohr- oder Stababschnitt definiert ist, der in eine komplementäre Aufnahmebohrung (12) der Haltevorrichtung (1) einschiebbar ist, wobei die Aufnahmebohrung (12) die Bewegungsbahn des Anschlußteils (3) in die Verriegelungsstellung definiert und wobei in diese Aufnahmebohrung (12) jeweils unter elastischer Vorspannung das Verriegelungselement (8) sowie Signalelement (4) bzw. ein Teil (6) desselben hineingedrängt sind.

8. Haltevorrichtung nach einem der Ansprüche 1 bis 7,
**dadurch gekennzeichnet, daß**
sie aus Leichtmetall, insbesondere Aluminium, oder Kunststoff hergestellt ist und am Rahmen eines Fahrzeugs, z.B. am Sitzrohr eines Fahrrads, befestigbar, insbesondere festklemmbar ist.

9. Haltevorrichtung nach einem der Ansprüche 1 bis 8,
**dadurch gekennzeichnet, daß**
das Anschlußteil (3) integraler Teil eines Gepäckträgers, Trägers für einen Fahrrad-Kindersitz, eines Gepäckbehälters oder dergleichen ist.

## Claims

1. A securing device (1) for securing an additional or integrated carrier, in particular a bicycle luggage carrier, a motor vehicle roof luggage rack, a motor vehicle bicycle rack, a child's bicycle seat or a carrier therefor, or the like for mounting on a vehicle, especially a vehicle frame, the securing device comprising at least an opening (2) for receiving a fitting (3), wherein a fitting (3) is capable of acting on a signal element (4) disposed in the securing device (1) for indicating optically and/or by touch the locking position of said securing device (1),
**characterized in that**
said signal element (4) is capable of being moved - irrespective of a locking element (8) of said securing device (1) - by a fitting (3) so that in one configuration in which, in the locked state, said signal element (4) is masked by a housing of the securing device (1), the portion of said signal element (4) that, in the unlocked state of the securing device, is not masked by the housing of the securing device (1) bears a colour which stands for "attention", whereas
in another configuration in which, in the locked state of the securing device (1), said signal element (4) is not masked by a housing of the securing device (1), the portion of said signal element that is not masked by the housing of the securing device (1) bears a colour which stands for "okay".

2. A securing device as claimed in claim 1,
**characterized in that**
said signal element (4) comprises a resiliently biased (13) turning lever (5) in such a way that, upon movement of said fitting (3) into the locking position, one end (6) of said lever projects into the path of said fitting (3) so as to be urged by said fitting (3) out of said path as soon as said fitting is in the locking position, while the associated turning lever (5) and the other end (7) thereof, which indicates whether or not said fitting (3) is in the locked position, is turned.

3. A securing device as claimed in any one of claims 1 or 2,
**characterized in that**
said fitting (3) has a locking element (8) associated therewith which in the locking position is interlocked with said fitting (3).

4. A securing device as claimed in claim 3,
**characterized in that**
said locking element (8) is disposed along the path of said fitting (3) upon movement of the same into the locking position in front of said signal element (4) projecting into said path and of an element (6) operatively connected thereto, so that said signal element (4) will be actuated only upon secure engagement of said locking element (8) with said fitting (3).

5. A securing device according to claim 3 or 4,
**characterized in that**
said locking element (8) is a pin (10), wedge, or bar cooperating with a corresponding recess (9) formed in said fitting (3), the pin (10), wedge, or bar being biased into the locking position by a resilient element.

6. A securing device as claimed in claim 5,
**characterized in that**
said locking pin (10) or the like is coupled to a preferably pushbutton-like handle (11) so that, when said handle (11) is acted upon, the locking pin (10) or similar locking element (8) is capable of being brought into a position to release said fitting.

7. A securing device as claimed in any one of claims 1 to 6,
**characterized in that**
said fitting (3) is defined by at least a tube or rod length for insertion into a complementary accommodating bore (12) of the securing device (1), wherein said accommodating bore (12) defines the path of movement of said fitting (3) into the locking position and wherein said locking element (8) as well as said signal element (4) or a part (6) thereof, respectively, are urged into said accommodating bore (12) each while being elastically biased.

8. A securing device as claimed in any one of claims 1 to 7,
**characterized in that**
the device is made of light metal, in particular aluminium, or plastics and is capable of being fixed, especially clamped, to the frame of a vehicle, for instance, to the seat tube of a bicycle.

9. A securing device as claimed in any one of claims 1 to 8,
**characterized in that**
said fitting (3) is an integral part of a luggage carrier, a carrier for a child's bicycle seat, a luggage container, or the like.

## Revendications

1. Dispositif de maintien (1) pour un porte-bagages spécial ou intégré, en particulier un porte-bagages pour bicyclette, un porte-bagages de toiture pour véhicule automobile, un porte-bicyclettes pour véhicule automobile, un siège d'enfant pour bicyclette ou un support à cet effet, ou similaires pour le montage sur un véhicule, en particulier sur un châssis de véhicule, comprenant au moins une ouverture (2) pour recevoir une pièce de raccordement (3), dans lequel un élément de signalisation (4) agencé dans le dispositif de maintien (1) peut être sollicité par une pièce de raccordement (3) pour l'affichage optique et/ou perceptible de la position de verrouillage du dispositif de maintien (1), **caractérisé en ce que** l'élément de signalisation (4) peut être déplacé indépendamment d'un élément de verrouillage (8) du dispositif de maintien (1) par une pièce de raccordement (3) de sorte que, dans une forme de construction dans laquelle l'élément de signalisation (4) est caché dans l'état verrouillé par un boîtier du dispositif de maintien (1), la partie de l'élément de signalisation (4), laquelle n'est pas cachée par le boîtier du dispositif de maintien (1) dans un état non verrouillé du dispositif de maintien (1), porte une couleur qui signifie « attention », tandis que, dans une autre forme de construction, dans laquelle l'élément de signalisation (4) n'est pas caché dans l'état verrouillé par un boîtier du dispositif de maintien (1), la partie de l'élément de signalisation, laquelle n'est pas cachée par le boîtier du dispositif de maintien (1), porte une couleur qui signifie « en ordre ».

2. Dispositif de maintien selon la revendication 1, **caractérisé en ce que** l'élément de signalisation (4) comporte un levier de pivotement (5) précontraint élastiquement (13) de sorte qu'une de ses extrémités (6) vient faire saillie jusque dans la trajectoire de la pièce de raccordement (3) lors d'un mouvement de celle-ci dans la position de verrouillage, pour être repoussée ensuite en dehors de la trajectoire mentionnée par la pièce de raccordement (3) dès que celle-ci se trouve dans la position de verrouillage, sous le pivotement simultané du levier de pivotement associé (5) et de son autre extrémité (7) qui indique si la pièce de raccordement (3) se trouve dans la position verrouillée ou non.

3. Dispositif de maintien selon l'une ou l'autre des revendications 1 et 2, **caractérisé en ce qu'**un élément de verrouillage (8) est attribué à la pièce de raccordement (3), lequel s'enclenche dans la position de verrouillage avec la pièce de raccordement (3).

4. Dispositif de maintien selon la revendication 3, **caractérisé en ce que** l'élément de verrouillage (8) est agencé le long de la trajectoire de la pièce de raccordement (3) lors d'un mouvement de celle-ci jusque dans la position de verrouillage, devant un élément de signalisation (4) venant faire saillie jusque dans cette trajectoire ou devant une pièce (6) reliée efficacement avec celui-ci, de sorte que l'élément de signalisation (4) est actionné seulement après un engagement sûr de l'élément de verrouillage (8) sur la pièce de raccordement (3).

5. Dispositif de maintien selon l'une ou l'autre des revendications 3 et 4, **caractérisé en ce que** l'élément de verrouillage (8) est un talon (10), une clavette ou un pêne, qui coopère avec un évidement correspondant (9) sur la pièce de raccordement (3) et qui, dans la position de verrouillage, est précontraint(e) par un élément élastique faisant ressort.

6. Dispositif de maintien selon la revendication 5, **caractérisé en ce que** le talon de verrouillage (10) ou similaire est accouplé à une prise (11), de préférence à la manière d'un bouton poussoir, de sorte que, lorsque la prise (11) est sollicitée, le talon de verrouillage (10) ou l'élément de verrouillage similaire (8) peut être amené jusque dans une position de libération de la pièce de raccordement.

7. Dispositif de maintien selon l'une des revendications 1 à 6, **caractérisé en ce que** la pièce de raccordement (3) est définie par au moins un tronçon de tube ou de tige qui peut être enfoncé dans un perçage d'évidement complémentaire (12) du dispositif de maintien (1), dans lequel :
- le perçage d'évidement (12) définit la trajectoire de mouvement de la pièce de raccordement (3) jusque dans la position de verrouillage ; et
- l'élément de verrouillage (8) ainsi que l'élément de signalisation (4) ou une partie (6) de celui-ci sont poussés jusque dans ce perçage d'évidement (12) respectivement sous une précontrainte élastique.

8. Dispositif de maintien selon l'une des revendications 1 à 7, **caractérisé en ce qu'**il est fabriqué en métal léger, en particulier de l'aluminium, ou en matière plastique, et qu'il peut être fixé, en particulier coincé fermement, sur le châssis d'un véhicule, par exemple sur le tube de siège d'une bicyclette.

9. Dispositif de maintien selon l'une des revendications 1 à 8, **caractérisé en ce que** la pièce de raccordement (3) fait partie intégrante d'un porte-bagages, d'un support pour un siège d'enfant de bicyclette ou similaire.
